# EUROPEAN PATENT APPLICATION

(11) **EP 4 697 674 A1**
(43) Date of publication of application: **18.02.2026**
(21) Application number: 24836399.6
(22) Date of filing: 16.05.2024
(51) Int. Cl.: H04L 65/752, H04L 67/54, H04L 65/613, H04N 21/6373

(54) **ELECTRONIC DEVICE FOR REDUCING SERVER COST, AND CONTROL METHOD THEREOF**

(30) Priority: 06.07.2023 KR 20230087888
(71) Applicant: Samsung Electronics Co., Ltd., Suwon-si, Gyeonggi-do 16677 (KR)
(72) Inventor: KIM, Yeonwoo, Suwon-si Gyeonggi-do 16677 (KR); KIM, Sehyun, Suwon-si Gyeonggi-do 16677 (KR); KIM, Donguk, Suwon-si Gyeonggi-do 16677 (KR); LEE, Jongin, Suwon-si Gyeonggi-do 16677 (KR); JEONG, Donghwa, Suwon-si Gyeonggi-do 16677 (KR)
(74) Representative: Appleyard Lees IP LLP
(86) International application number: PCT/KR2024/095774
(87) International publication number: WO 2025/009952

(57) **Abstract**

An electronic device is disclosed. This electronic device may include a communication interface and at least one processor connected to the communication interface to control the electronic device, wherein the processor executes an application with a first performance by driving a first instance, controls the communication interface to stream a screen corresponding to the execution of the application to an external device, and when information corresponding to user absence is received from the external device through the communication interface, executes the application with a second performance lower than the first performance by driving a second instance.

## Description

### [Technical Field]

Apparatuses and methods consistent with the disclosure relate to an electronic device and a control method thereof, and more particularly, to an electronic device for reducing server cost and a control method thereof.

### [Background Art]

With the advancement of electronic technology, electronic devices offering various functions have been developed. In particular, systems enabling streaming remote play of video games using cloud computing technology have recently been developed.

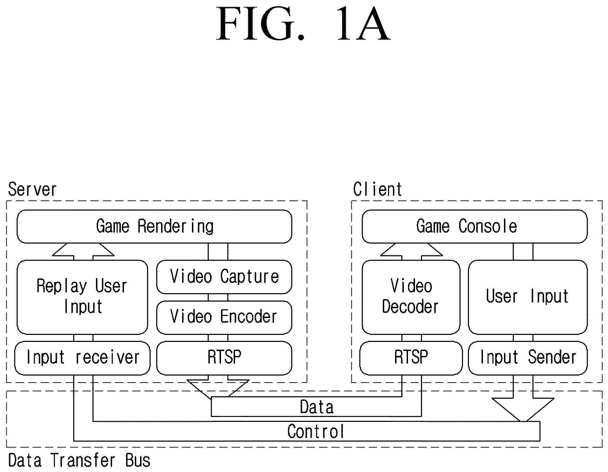

For example, as illustrated in FIG. 1A, a cloud server may render a game, capture video, encode the captured video, and provide the encoded video to a display device (client), such as a TV, via real time streaming protocol (RTSP). The display device may decode and reproduce the encoded video, and upon receiving user input, the display device may transmit the user input to the cloud server, which may then render the game based by reflecting the user input. This process incurs costs for the cloud server, and there is a problem in that the costs persist even when the user is away from his/her seat.

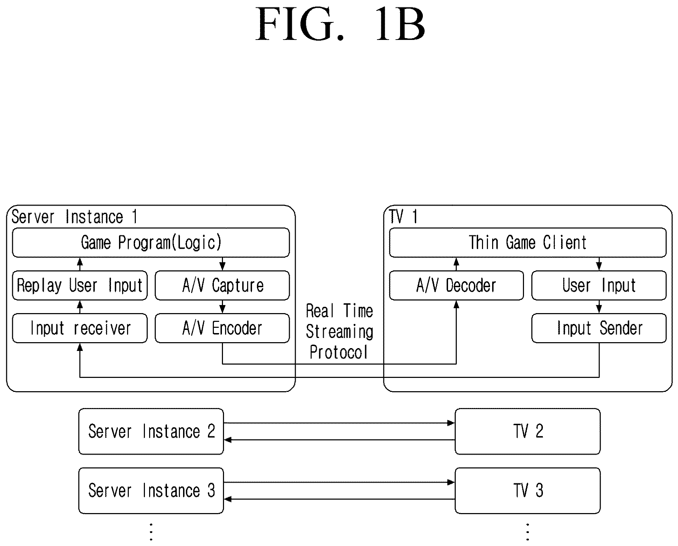

Furthermore, as illustrated in FIG. 1B, the cloud server requires a server instance for each user. The instance may be a virtual machine running in a cloud environment. For example, the server instance may run a game on the cloud server, and a thin client on a display device may transmit user input to a corresponding server instance, receive video from the server instance, and display the same. Such a server instance may be created only when a user runs a game.

That is, server costs may be incurred for a plurality of users, and unnecessary costs increase as users are more frequently away from their seats. In particular, high-performance server instances have higher hourly costs compared to low-performance server instances.

To address this issue, if a user is away from his/her seat for a certain period of time, it may be identified whether the user is still playing the game, and then, if there is no response from the user for a certain period of time, the server instance may be terminated. However, in this case, the game playing may be terminated regardless of the user's intent.

Therefore, a method for resolving the above problem needs to be developed.

### [Disclosure of Invention]

### [Solution to Problem]

In accordance with an aspect of the disclosure, an electronic device includes a communication interface and one or more processors connected to the communication interface to control the electronic device, wherein the processor is configured to run a first instance to execute an application at a first performance level, control the communication interface to stream a screen corresponding to the execution of the application to an external device, and run, based on information corresponding to a user's absence received from the external device through the communication interface, a second instance to execute the application at a second performance level which is a performance level lower than the first performance level.

Furthermore, the processor may be configured to, based on a first period of time having elapsed since the information corresponding to the user's absence was received, run the second instance to execute the application at the second performance level.

Also, the processor may include: a first subprocessor and a second subprocessor having lower performance than the first subprocessor, wherein the first subprocessor may be configured to run the first instance to execute the application at the first performance level, control the communication interface to stream a screen corresponding to the execution of the application to the external device, and run, based on the first period of time having elapsed since the information corresponding to the user's absence was received, the second instance to lower at least one of a transmission bit rate of the screen corresponding to the execution of the application or a resolution of the application.

Furthermore, the first subprocessor may be configured to provide, based on a second period of time, greater than the first period of time, having elapsed since the information corresponding to the user's absence was received, first information for controlling the second subprocessor to execute the application to the second subprocessor, and the second subprocessor may be configured to run a third instance to execute the application at a third performance level which is a performance level lower than the second performance level and control the communication interface to stream the screen corresponding to the execution of the application to the external device.

Also, the second subprocessor may be configured to, based on a third period of time, greater than the second period of time, having elapsed since the information corresponding to the user's absence was received, run a fourth instance to execute the application and terminate the streaming of the screen corresponding to the execution of the application.

Furthermore, the second subprocessor may be configured to, based on information corresponding to the user's presence received from the external device through the communication interface, run the third instance to execute the application at the third performance level and control the communication interface to stream the screen corresponding to the execution of the application to the external device, and provide second information for controlling the first subprocessor to execute the application to the first subprocessor, and the first subprocessor may be configured to run the first instance to execute the application at the first performance level and control the communication interface to stream the screen corresponding to the execution of the application to the external device.

Also, the first information may include an execution command of the second subprocessor and status information of the application, and the first subprocessor may be configured to terminate the running of the second instance after providing the first information to the second subprocessor.

Furthermore, the processor may be configured to, based on information corresponding to the user's presence received from the external device through the communication interface, run the first instance to execute the application at the first performance level.

Also, the processor may be configured to, based on information on a waiting time of the application received from the external device, run the second instance during the waiting time to execute the application at the second performance level.

Furthermore, the processor may be configured to, based on an execution command of the application received from the external device, run the first instance to execute the application at the first performance level.

In accordance with an aspect of the disclosure, a control method of an electronic device includes running a first instance to execute an application at a first performance level, streaming a screen corresponding to the execution of the application to an external device, and running, based on information corresponding to a user's absence received from the external device, a second instance to execute the application at a second performance level which is a performance level lower than the first performance level.

Furthermore, the executing of the application at the second performance level may include running, based on a first period of time having elapsed since the information corresponding to the user's absence was received, the second instance to execute the application at the second performance level.

Also, the executing of the application at the first performance level may include running, by a first subprocessor, the first instance to execute the application at the first performance level, and the executing of the application at the second performance level may include running, based on the first period of time having elapsed since the information corresponding to the user's absence was received, the second instance, by the second subprocessor with lower performance than the first subprocessor, to lower at least one of a transmission bit rate of the screen corresponding to the execution of the application or a resolution of the application.

Furthermore, the control method may further include providing, based on a second period of time, greater than the first period of time, having elapsed since the information corresponding to the user's absence was received, by the first subprocessor, first information for controlling the second subprocessor to execute the application to the second subprocessor and running, by the second subprocessor, a third instance to execute the application at a third performance level which is a performance level lower than the second performance level.

Also, the control method may further include running, based on a third period of time, greater than the second period of time, having elapsed since the information corresponding to the user's absence was received, a fourth instance by the second subprocessor to execute the application and terminating the streaming of the screen corresponding to the execution of the application.

Furthermore, the method may further include an operation in which, based on information corresponding to the presence of the user received from the external device, the second subprocessor runs the third instance to execute the application at the third performance level; an operation in which the second subprocessor provides second information for controlling the first subprocessor to execute the application to the first subprocessor; and an operation in which the first subprocessor runs the first instance to execute the application at the first performance level.

Furthermore, the first information may include an execution command of the second subprocessor and status information of the application, and the method may further include an operation in which the first subprocessor terminates the running of the second instance after providing the first information to the second subprocessor.

Also, the method may further include running, based on information corresponding to the user's presence received from the external device, the first instance to execute the application at the first performance level.

Furthermore, the method may further include running, based on information on a waiting time of the application received from the external device the second instance to execute the application at the second performance level during the waiting time.

Also, the executing of the application at the first performance level may include running, based on an execution command of the application received from the external device, the first instance to execute the application at the first performance level.

### [Brief Description of Drawings]

FIGS. 1a and 1b are diagrams illustrating a server instance to facilitate understanding of the disclosure.
FIG. 2 is a block diagram illustrating a configuration of an electronic device according to an embodiment of the disclosure.
FIG. 3 is a block diagram illustrating a configuration of an external device according to an embodiment of the disclosure.
FIG. 4 is a block diagram illustrating a detailed configuration of an external device according to an embodiment of the disclosure.
FIGS. 5 and 6 are diagrams illustrating performance-based costs according to an embodiment of the disclosure.
FIG. 7 is a sequence diagram illustrating an operation based on a waiting time setting according to an embodiment of the disclosure.
FIG. 8 is a sequence diagram illustrating an instance change operation according to an embodiment of the disclosure.
FIGS. 9 and 10 are diagrams illustrating a timer function according to an embodiment of the disclosure.
FIG. 11 is a flowchart illustrating a control method of an electronic device according to an embodiment of the disclosure.

### [Mode for Invention]

An object of the disclosure is to provide an electronic device and a control method thereof for reducing costs for a server instance based on a user who is away from his/her seat.

Hereinafter, the disclosure will be described in detail with reference to the accompanying drawings.

The terms used in the embodiments of the disclosure are general terms which are widely used now and selected considering the functions of the disclosure. However, the terms may vary depending on the intention of a person skilled in the art, a precedent, or the advent of new technology. In addition, in a specified case, the term may be arbitrarily selected. In this case, the meaning of the term will be explained in the corresponding description. Therefore, terms used in the disclosure may be defined based on a meaning of the terms and contents described in the disclosure, not simply based on names of the terms.

As used herein, the expression "have", "may have", "include", or "may include" refers to the existence of a corresponding feature (e.g., numeral, function, operation, or constituent element, such as component), and does not exclude one or more additional features.

The expression of "at least one of A and/or B" is to be understood as indicating any one of "A" or "B" or "A and B".

The expression "a first", "a second", "the first", or "the second" used in various embodiments of the disclosure may modify various components regardless of their order and/or the importance but does not limit the corresponding components.

A singular expression includes a plural expression as long as they are clearly distinguished in the context. In the application, it should be understood that the terms, such as "comprising", "including" are intended to express that features, numbers, steps, operations, constituent elements, part, or combinations thereof described in the specification are present and do not exclude existence or additions of one or more other features, numbers, steps, operations, constituent elements, part, or combinations thereof.

In this disclosure, the term "user" may indicate a person who uses an electronic device or a device (e.g., an artificial intelligence electronic device) that uses an electronic device.

Various embodiments of the disclosure will be described in detail with reference to the accompanying drawings.

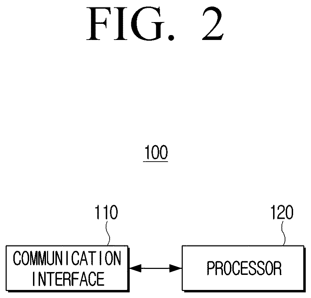

FIG. 2 is a block diagram illustrating a configuration of an electronic device 100 according to an embodiment of the disclosure.

The electronic device 100 is a device that creates instances and may be a server. For example, when a game execution command is received from an external device 200, the electronic device 100 may run an instance to render a game, capture a video, encode the captured video, and transmit the encoded video to the external device 200 via a real time streaming protocol (RTSP).

However, the electronic device 100 is not limited thereto, and any device capable of creating instances may be used.

According to FIG. 2, the electronic device 100 includes a communication interface 110 and a processor 120.

The communication interface 110 is a component that communicates with various types of external devices according to various communication methods. For example, the electronic device 100 may communicate with the external device 200, a user terminal, etc., through the communication interface 110.

The communication interface 110 may include a Wi-Fi module, a Bluetooth module, an infrared communication module, and a wireless communication module. Each communication module may be implemented in the form of at least one hardware chip.

The Wi-Fi module and the Bluetooth module perform communication using the Wi-Fi and Bluetooth protocols, respectively. In the case of using the Wi-Fi or Bluetooth module, various connection information, such as an SSID and session key, is first transmitted and received, communication is connected using various connection information, and then, various information may be transmitted and received. The infrared communication module performs communication according to infrared data association (IrDA) technology, which transmits data wirelessly within a short distance using infrared rays existing in a wavelength between visible light and millimeter waves.

In addition to the communication methods described above, the wireless communication module may include at least one communication chip that performs communication according to various wireless communication standards, such as Zigbee, 3G (3rd Generation), 3GPP (3rd Generation Partnership Project), LTE (Long Term Evolution), LTE-A (LTE Advanced), 4G (4th Generation), and 5G (5th Generation).

Alternatively, the communication interface 110 may include a wired communication interface, such as HDMI, DP, Thunderbolt, USB, RGB, D-SUB, or DVI.

Furthermore, the communication interface 110 may include at least one of a local area network (LAN) module, an Ethernet module, or a wired communication module that performs communication using a paired cable, coaxial cable, or fiber optic cable.

The processor 120 controls the overall operation of the electronic device 100. Specifically, the processor 120 may be connected to each component of the electronic device 100 and may control the overall operation of the electronic device 100. For example, the processor 120 may be connected to components, such as the communication interface 110, memory (not shown), etc. and may control the operation of the electronic device 100.

The one or more processors 120 may include one or more of a CPU, a graphics processing unit (GPU), an accelerated processing unit (APU), a many integrated core (MIC), a neural processing unit (NPU), a hardware accelerator, or a machine learning accelerator. The one or more processors 120 may control one of other components of the electronic device 100 or any combinations thereof and perform operations related to communication or data processing. The one or more processors 120 may execute one or more programs or instructions stored in memory. For example, the one or more processors 120 may execute one or more instructions stored in the memory to perform a method according to an embodiment of the disclosure.

If the method according to an embodiment of the disclosure includes a plurality of operations, the plurality of operations may be performed by a single processor or by a plurality of processors. For example, when a first operation, a second operation, and a third operation are performed by the method according to an embodiment, the first, second, and third operations may all be performed by a first processor, the first and second operations may be performed by the first processor (e.g., a general-purpose processor), and the third operation may be performed by a second processor (e.g., an artificial intelligence-specific processor).

The one or more processors 120 may be implemented as a single-core processor including one core or as one or more multi-core processors including a plurality of cores (e.g., homogeneous multi-cores or heterogeneous multi-cores). Based on the one or more processors 120 being implemented as multi-core processors, each of the plurality of cores included in the multi-core processor may include internal processor memory, such as cache memory or on-chip memory, and a common cache shared by the plurality of cores may be included in the multi-core processor. In addition, each of the plurality of cores (or some of the cores) included in a multi-core processor may independently read and execute program instructions for implementing the method according to an embodiment of the disclosure, or all (or some) of the plurality of cores may be linked to read and execute program instructions for implementing the method according to an embodiment of the disclosure.

Based on the method according to an embodiment of the disclosure including a plurality of operations, the plurality of operations may be performed by one of the plurality of cores included in the multi-core processor, or by the plurality of cores. For example, when a first operation, a second operation, and a third operation are performed by the method according to an embodiment, the first, second, and third operations may all be performed by a first core included in the multi-core processor, or the first and second operations may be performed by the first core included in the multi-core processor and the third operation may be performed by the second core included in the multi-core processor.

In embodiments of the disclosure, the one or more processors 120 may refer to a system-on-chip (SoC) in which one or more processors and other electronic components are integrated, a single-core processor, a multi-core processor, or a core included in a single-core processor or multi-core processor, and here, the core may be implemented as a CPU, GPU, APU, MIC, NPU, hardware accelerator, or machine learning accelerator, but the embodiments of the disclosure are not limited thereto. However, for convenience of description, the operation of the electronic device 100 will be described hereinafter by the expression of the processor 120.

The processor 120 may run a first instance to execute an application at a first performance level. For example, upon receiving an execution command of an application from the external device 200, the processor 120 may run a first instance to execute the application at the first performance level. Here, the application may be a game. However, the disclosure is not limited thereto, and the application may be any application related to a cloud service.

The processor 120 may control the communication interface 110 to stream a screen corresponding to application execution to the external device 200. For example, the processor 120 may control the communication interface 110 to encode a screen corresponding to application execution and stream the encoded screen to the external device 200. Alternatively, the processor 120 may control the communication interface 110 to downscale the screen corresponding to application execution using a neural network model, encode the downscaled screen, and stream the encoded screen to the external device 200.

Based on information corresponding to user absence received from the external device 200 via the communication interface 110, the processor 120 may run a second instance to execute the application at a second performance level which is a performance level lower than the first performance level of the first instance. For example, based on information indicating that the user of the external device 200 is absent received from the external device 200, the processor 120 may run the second instance to execute the application at the second performance level which is a performance level lower than the first performance level of the first instance.

Based on a first period of time having elapsed since the information corresponding to the user's absence was received, the processor 120 may run the second instance and execute the application at the second performance level. For example, based on one minute having elapsed since the information corresponding to the user's absence was received, the processor 120 may run the second instance and execute the application at the second performance level. However, based on information corresponding to the user's presence received from the external device 200 or a user command for the application received within the first period of time after the information corresponding to the user's absence was received, the processor 120 may maintain the first instance without running the second instance.

Based on the information corresponding to the user's presence received from the external device 200 via the communication interface 110, the processor 120 may run the first instance and execute the application at the first performance level. For example, based on information corresponding to the user's presence received from the external device 200 via the communication interface 110, while the processor 120 is running the second instance and executing the application at the second performance level, the processor 120 may run the first instance and execute the application at the first performance level. However, without being limited thereto, based on a user command for the application received from the external device 200 via the communication interface 110, while the processor 120 is running the second instance and executing the application at the second performance level, the processor 120 may run the first instance and execute the application at the first performance level.

Based on information regarding a waiting time of the application received from the external device 200, the processor 120 may run the second instance and execute the application at the second performance level during the waiting time. For example, the external device 200 may provide a timer function to receive information on the waiting time indicating the user's absence time from the user and transmit the received information to the electronic device 100. Based on the received waiting time information, the processor 120 may run the second instance during the waiting time to execute the application at the second performance level.

The processor 120 may include a first subprocessor and a second subprocessor with lower performance than the first subprocessor. The first subprocessor may run the first instance to execute the application at the first performance level and control the communication interface 110 to stream a screen corresponding to the application execution to the external device 200. Based on the first period of time having elapsed since the information corresponding to the user's absence was received, the processor 120 may run the second instance to lower at least one of a transmission bit rate of the screen corresponding to the application execution or the resolution of the application. Costs may be saved as the first subprocessor lowers the running performance of the application.

Based on a second period of time, greater than the first period of time, having elapsed since the information corresponding to the user's absence was received, the first subprocessor may provide first information for controlling the second subprocessor to execute the application to the second subprocessor, and the second subprocessor may control the communication interface 110 to run a third instance to execute the application at a third performance level which is a performance level lower than the second performance level and to stream the screen corresponding to the application execution to the external device 200. Here, the first information may include an execution command for the second subprocessor and status information of the application. The first subprocessor may provide the first information to the second subprocessor and then terminate the running of the second instance. Furthermore, the first subprocessor has higher performance than the second subprocessor, so it is more expensive, and since the second subprocessor, instead of the first subprocessor, executes the application, costs may be saved.

Based on a third period of time, greater than the second period of time, having elapsed since the information corresponding to the user's absence was received, the second subprocessor may run a fourth instance to execute the application and terminate the streaming of the screen corresponding to the application execution. That is, the second subprocessor may execute the application but not perform an operation related to streaming the screen corresponding to the application execution. Costs may be saved because the second subprocessor does not stream the screen corresponding to the application execution.

Based on the information corresponding to the user's presence from the external device 200 via the communication interface 110, the second subprocessor may control the communication interface 110 to run the third instance to execute the application at the third performance level and stream the screen corresponding to the application execution to the external device 200 and provides the first subprocessor with second information for controlling the first subprocessor to execute the application, and the first subprocessor may control the communication interface 110 to run the first instance to execute the application at the first performance level and stream the screen corresponding to the application execution to the external device 200. That is, the electronic device 100 may stream the screen corresponding to the execution of the third-performance application to the external device 200, and thereafter, based on the completion of the running of the first instance by the first subprocessor, the electronic device 100 may stream the screen corresponding to the execution of the first-performance application to the external device 200. Once the screen corresponding to the execution of the first-performance application is streamed to the external device 200, the second subprocessor may terminate the running of the third instance.

In the above, although the first through fourth instances have been used as examples, the disclosure is not limited thereto, and instances may be run in various manners. For example, based on the first period of time having lapsed since the information corresponding to the user's absence was received while the first subprocessor is running the application with the first instance, the second subprocessor may execute the application with the fourth instance.

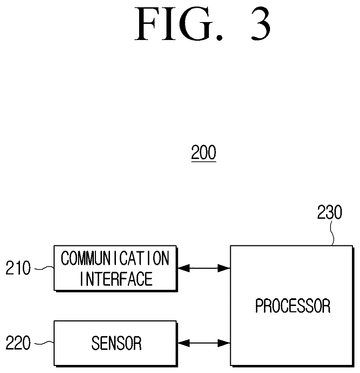

FIG. 3 is a block diagram illustrating a configuration of the external device 200 according to an embodiment of the disclosure.

The external device 200 may be a device that displays a screen corresponding to execution of an application received from the electronic device 100. For example, the external device 200 may be a device equipped with a display, such as a TV, desktop PC, laptop, digital video disk (DVD) player, smartphone, tablet PC, monitor, smart glasses, or smartwatch, and may display a screen corresponding to the execution of the application received from the electronic device 100. Alternatively, the external device 200 may be a device without a display, such as a speaker or computer body. In this case, the external device 200 may transmit a screen corresponding to the execution of the application received from the electronic device 100 to a device equipped with a display. During this process, the external device 200 may decode the screen corresponding to the execution of the application received from the electronic device 100 and transmit the decoded screen to the device equipped with a display.

According to FIG. 3, the external device 200 includes a communication interface 210, a sensor 220, and a processor 230.

The communication interface 210 is a component that performs communication with various types of external devices according to various communication methods. For example, the external device 200 may communicate with the electronic device 100, a user terminal, etc., through the communication interface 210.

The communication interface 210 may include a Wi-Fi module, a Bluetooth module, an infrared communication module, and a wireless communication module. Each communication module may be implemented in the form of at least one hardware chip.

The Wi-Fi module and Bluetooth module perform communication via Wi-Fi and Bluetooth, respectively. In the case of using the Wi-Fi or Bluetooth module, various connection information, such as the SSID and session key, may be first transmitted and received, and this information may then be used to establish a communication connection to transmit and receive various information. The infrared communication module performs communication using infrared data association (IrDA) technology to transmit data wirelessly over short distances by using infrared light which lies between visible light and millimeter waves,.

In addition to the aforementioned communication methods, the wireless communication module may include at least one communication chip performing communication according to various wireless communication standards, such as Zigbee, 3G (3rd Generation), 3GPP (3rd Generation Partnership Project), LTE (Long Term Evolution), LTE-A (LTE Advanced), 4G (4th Generation), and 5G (5th Generation).

Alternatively, the communication interface 210 may include a wired communication interface, such as HDMI, DP, Thunderbolt, USB, RGB, D-SUB, or DVI.

In addition, the communication interface 210 may include at least one of a local area network (LAN) module, an Ethernet module, or a wired communication module that performs communication using pair cables, coaxial cables, or fiber optic cables.

The sensor 220 may be configured to detect the user's presence. For example, the sensor 220 may include at least one of a camera, an RGB-D sensor, or a ToF sensor.

The processor 230 captures still or moving images via the camera 110 and identifies the user's presence from the captured images. Alternatively, the processor 230 may acquire RGB images in the visible light range, depth images via IR, and thermal images via IR through the RGB-D sensor, and identify the user's presence from these images. Alternatively, the processor 230 may calculate a distance over which light emitted from an object to bounce back through the ToF sensor to recognize three-dimensionality, spatial information, and movement of an object, thereby identifying the user's presence.

However, without being limited thereto, the sensor 220 may be of any configuration that identifies the user's presence.

The processor 230 controls the overall operation of the external device 200. Specifically, the processor 230 may be connected to each component of the external device 200 and may control the overall operation of the electronic device 100. For example, the processor 230 may be connected to components, such as the communication interface 210, the sensor 220, and memory (not shown) to control the operation of the external device 200.

The one or more processors 230 may include one or more of a CPU, a GPU (Graphics Processing Unit), an APU (Accelerated Processing Unit), a MIC (Many Integrated Core), an NPU (Neural Processing Unit), a hardware accelerator, or a machine learning accelerator. The one or more processors 230 may control one or any combination of other components of the external device 200 and perform communication-related operations or data processing. The one or more processors 230 may execute one or more programs or instructions stored in memory. For example, the one or more processors 230 may execute one or more instructions stored in memory to perform the method according to an embodiment of the disclosure.

In case that the method according to an embodiment of the disclosure includes a plurality of operations, the plurality of operations may be performed by one processor or a plurality of processors. For example, when a first operation, a second operation, and a third operation are performed by a method according to an embodiment, the first, second, and third operations may all be performed by the first processor, or the first and second operations may be performed by the first processor (e.g., a general-purpose processor) and the third operation may be performed by the second processor (e.g., an AI-specific processor).

The one or more processors 230 may be implemented as a single-core processor including one core or as one or more multi-core processors including a plurality of cores (e.g., homogeneous multi-cores or heterogeneous multi-cores). When one or more processors 230 are implemented as multi-core processors, each of the plurality of cores included in the multi-core processor may include internal processor memory, such as cache memory or on-chip memory, and a common cache shared by the plurality of cores may be included in the multi-core processor. Furthermore, each of the plurality of cores (or some of the plurality of cores) included in the multi-core processor may independently read and execute program instructions for implementing the method according to an embodiment of the disclosure, or all (or some) of the plurality of cores may be linked to read and execute program instructions for implementing the method according to an embodiment of the disclosure.

When the method according to an embodiment of the disclosure includes a plurality of operations, the plurality of operations may be performed by one of the plurality of cores included in the multi-core processor or by the plurality of cores. For example, when the first, second, and third operations are performed by the method according to an embodiment, the first, second, and third operations may all be performed by a first core included in the multi-core processor, or the first and second operations may be performed by a first core included in the multi-core processor, and the third operation may be performed by a second core included in the multi-core processor.

In embodiments of the disclosure, the one or more processors 230 may refer to a system-on-chip (SoC) in which one or more processors and other electronic components are integrated, a single-core processor, a multi-core processor, or a core included in the single-core processor or the multi-core processor. Here, the core may be implemented as a CPU, GPU, APU, MIC, NPU, hardware accelerator, or machine learning accelerator, but embodiments of the disclosure are not limited thereto. However, for convenience of description, the operation of the external device 200 will be described hereinafter by the expression of the processor 230.

The processor 230 may receive a screen corresponding to the execution of an application streamed from the electronic device 100 via the communication interface 210 and provide the screen corresponding to the execution of the application to the user. For example, the external device 200 may include a display, and the processor 230 may control the display to provide the screen corresponding to the execution of the application to the user. Alternatively, the processor 230 may provide the screen corresponding to the execution of the application to a device equipped with a display.

While providing the screen corresponding to the execution of the application to the user, the processor 230 may detect the user's presence via the sensor 220, and based on the user identified as being absent, the processor 230 may control the communication interface 210 to transmit information corresponding to the user's absence to the electronic device 100. Thereafter, based on the user identified as being present, the processor 230 may control the communication interface 210 to transmit information corresponding to the user's presence to the electronic device 100.

The processor 230 of the external device 200 may provide a timer function and control the communication interface 210 to receive information on the user's waiting time, which indicates the user's absence, from the user and transmit the received information to the electronic device 100.

As described above, the external device 200 may provide the user with a screen corresponding to the execution of the application received from the electronic device 100 and provide the electronic device 100 with information on the user's presence.

However, the disclosure is not limited thereto, and the external device 200 may also be a device authorized to control the electronic device 100. Hereinafter, a case in which the external device 200 is authorized to control the electronic device 100 is described.

Based on an execution command of an application received from the user, the processor 230 may control the communication interface 210 to transmit the execution command of the application to the electronic device 100. In this case, the electronic device 100 may run the first instance to execute the application at the first performance level and stream the screen corresponding to the execution of the application to the external device 200, and the processor 230 may display the screen corresponding to the execution of the application.

Based on the absence of the user detected through the sensor 220, the processor 230 may control the communication interface 210 to transmit a control command for controlling the electronic device 100 to run the second instance and execute the application at the second performance level which is a performance level lower than the first performance level to the electronic device 100. Alternatively, based on the first period of time having elapsed since the absence of the user was detected through the sensor 220, the processor 230 may control the communication interface 210 to transmit a control command for controlling the electronic device 100 to run the second instance and execute the application at the second performance level which is a performance level lower than the first performance level to the electronic device 100.

Thereafter, based on the user's presence detected through the sensor 220, the processor 230 may control the communication interface 210 to transmit a control command for controlling the electronic device 100 to run the first instance and execute the application at the first performance level to the electronic device 100.

The processor 230 may provide the user with a screen including a timer function and receive information on the waiting time of the application from the user. The processor 230 may control the communication interface 210 to transmit a control command for controlling the electronic device 100 to run the second instance and execute the application at the second performance level to the electronic device 100 during the waiting time of the application.

Meanwhile, the processor 120 of the electronic device 100 may include a first subprocessor and a second subprocessor with lower performance than the first subprocessor, and the processor 230 of the external device 200 may control at least one of the first subprocessor or the second subprocessor.

For example, upon receiving an execution command of the application from the user, the processor 230 may control the communication interface 210 to transmit a control command for controlling the first subprocessor to run the first instance and execute the application at the first performance level to the electronic device 100.

Based on the first period of time having elapsed since the sensor 220 detected the absence of the user, the processor 230 may control the communication interface 210 to transmit a control command for controlling the electronic device 100 to run the second instance and execute the application at the second performance level which is a performance level lower than the first performance level to the electronic device 100. Based on that the first instance is changed to the second instance, at least one of a transmission bit rate of the screen corresponding to the execution of the application or the resolution of the application may be reduced and costs may be reduced.

Based on the second period of time, greater than the first period of time, having elapsed since the sensor 220 detected the absence of the user, the processor 230 may control the communication interface 210 to transmit a control command for controlling the second subprocessor to run the third instance and execute the application at the third performance level which is a performance level lower than the second performance level to the electronic device 100. In this case, the first subprocessor may provide status information of the application to the second subprocessor and terminate the running of the second instance. The first subprocessor has higher performance than the second subprocessor and thus is more expensive. Therefore, since the second subprocessor, instead of the first subprocessor, runs the application, the costs may be reduced.

Based on the third period of time, greater than the second period of time, having elapsed since the sensor 220 detected the absence of the user, the processor 230 may control the communication interface 210 to transmit a control command for controlling to run the fourth instance to execute the application and terminate streaming to the electronic device 100. Since the second subprocessor does not stream the screen corresponding to the execution of the application, costs may be reduced.

Based on the direction of the user's presence through the sensor 220, the processor 230 may control the communication interface 210 to transmit a control command for controlling to run the third instance to execute the application at the third performance level and a control command for controlling the first subprocessor to run the first instance and execute the application at the first performance level to the electronic device 100. In this case, the electronic device 100 may stream a screen corresponding to the execution of the third-performance application to the external device 200, and thereafter, based on the completion of the running of the first instance by the first subprocessor, the electronic device 100 may stream the screen corresponding to the execution of the first performance application to the external device 200. Once the screen corresponding to the execution of the first-performance application is streamed to the external device 200, the second subprocessor may terminate the running of the third instance.

In the above, although the first through fourth instances have been used as examples, the disclosure is not limited thereto, and the instances may be run in various manners. For example, based on the first period of time having lapsed since the user's absence was detected by the sensor 220, while the first subprocessor is executing the application with the first instance, the processor 230 may control the communication interface 210 to transmit a control command for controlling the second subprocessor to execute the application with the fourth instance to the electronic device 100.

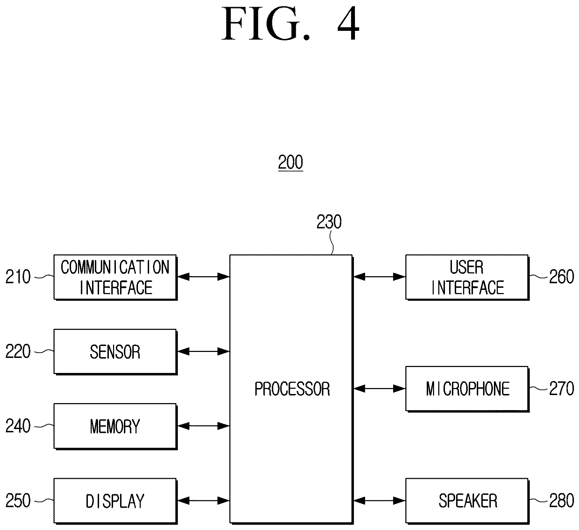

FIG. 4 is a block diagram illustrating a detailed configuration of the external device 200 according to an embodiment of the disclosure. The external device 200 may include the communication interface 210, the sensor 220, and the processor 230. Furthermore, according to FIG. 4, the electronic device 100 may further include a memory 240, a display 250, a user interface 260, a microphone 270, and a speaker 280. A detailed description of the same components illustrated in FIG. 4 as those illustrated in FIG. 3 will be omitted.

The memory 240 may refer to hardware that stores information, such as data, in an electrical or magnetic form so that the processor 230 or the like may access the information. To this end, the memory 240 may be implemented as at least one of nonvolatile memory, volatile memory, flash memory, a hard disk drive (HDD), a solid-state drive (SSD), RAM, ROM, or the like.

The memory 240 may store at least one instruction required for the operation of the external device 200 or the processor 230. Here, an instruction is a code unit that indicates the operation of the external device 200 or the processor 230 and may be written in machine language, a language understandable by a computer. Alternatively, the memory 240 may store a plurality of instructions for performing specific tasks of the external device 200 or processor 230 as an instruction set.

The memory 240 may store data, which is information in bit or byte unit that may represent characters, numbers, images, etc. For example, the memory 240 may store a user detection module, a timer module, etc.

The memory 240 is accessed by the processor 230, and instructions, instruction sets, or data may be read/written/modified/deleted/updated by the processor 230.

The display 250 displays images and may be implemented in various forms, such as an LCD (Liquid Crystal Display), an OLED (Organic Light Emitting Diodes) display, or a PDP (Plasma Display Panel). The display 250 may also include a driving circuit, a backlight unit, or the like, which may be implemented in forms, such as an a-si TFT, a LTPS (low temperature poly silicon) TFT, or an OTFT (organic TFT). Meanwhile, the display 250 may be implemented as a touch screen combined with a touch sensor, a flexible display, a 3D display, or the like.

The processor 230 may control the display 250 to display a screen corresponding to the execution of an application received from the electronic device 100.

The user interface 260 may be implemented as a button, a touchpad, a mouse, a keyboard, or a touchscreen capable of performing both display and operation input functions. Here, the button may be various types of buttons, such as a mechanical button, a touchpad, or a wheel, formed in a certain region of the external device 200, such as a front surface portion, a side surface portion, or a rear surface portion of the exterior of a main body.

The microphone 270 is a component that receives sound and converts the sound into an audio signal. The microphone 270 may be electrically connected to the processor 230 and may receive sound under the control of the processor 230.

For example, the microphone 270 may be formed as an integrated unit integrated on the top, front, or side of the external device 200. Alternatively, the microphone 270 may be installed in a remote controller, separate from the external device 200. In this case, the remote controller may receive sound through the microphone 270 and provide the received sound to the external device 200.

The microphone 270 may include various components, such as a microphone that collects analog sound, an amplifier circuit that amplifies the collected sound, an A/D conversion circuit that samples the amplified sound and converts the same into a digital signal, and a filter circuit that cancels noise from the converted digital signal.

Meanwhile, the microphone 270 may be implemented in the form of a sound sensor, or any other component capable of collecting sound may be used.

The processor 230 may also identify the user's presence through the microphone 270.

The speaker 280 is a component that outputs various audio data processed by the processor 230, as well as various notification sounds and voice messages.

As described above, the electronic device 100 may reduce costs by changing the operating performance of an application based on the user's presence or absence of the external device 200.

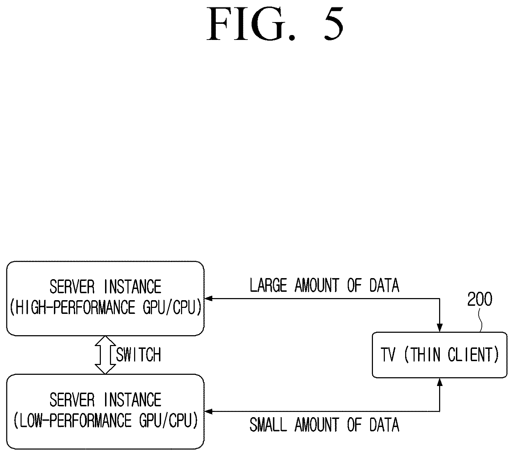

Hereinafter, the operation of the electronic device 100 is described in more detail with reference to FIGS. 5 through 10 . For convenience of description, individual embodiments are described with reference to FIGS. 5 to 10. However, the individual embodiments of FIGS. 5 through 10 may be implemented in any combination.

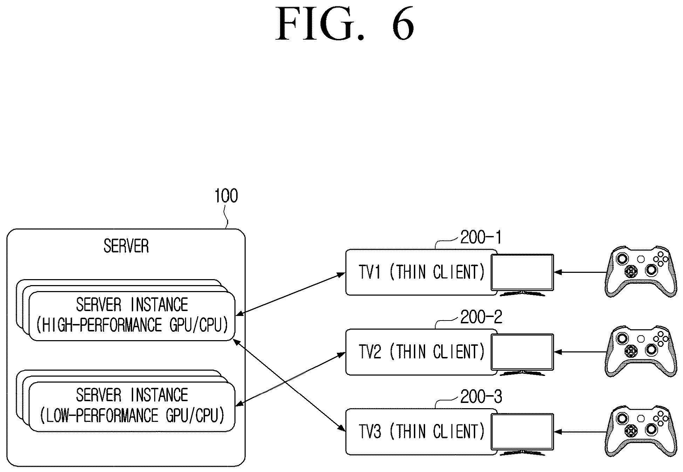

FIGS. 5 and 6 are diagrams illustrating costs for each performance according to an embodiment of the disclosure.

Based on information corresponding to the user's absence received from the external device 200, the processor 120 may change the first instance to the second instance and execute the application at the second performance level which is a performance level lower than the first performance level.

For example, as illustrated in FIG. 5 , based on the user's presence or absence, the processor 120 may use the first instance of a high-performance GPU/CPU or the second instance of a low-performance GPU/CPU. Based on the application executed with the first instance of the high-performance GPU/CPU, the amount of data is relatively large, and based on the application executed with the second instance of the low-performance GPU/CPU, the amount of data is relatively small. When the user is absent, the application may be executed with the second instance of the low-performance GPU/CPU, thereby reducing costs.

The electronic device 100 may run a plurality of instances, respectively corresponding to a plurality of external devices 200-1, 200-2, and 200-3. For example, as illustrated in FIG. 6, the processor 120 may execute the application with the first instance of the high-performance GPU/CPU for the first external device 200-1 and the third external device 200-3 in which the user is present and may execute the application with the second instance of the low-performance GPU/CPU for the second external device 200-2 in which the user is absent.

Through the above operations, the execution status of the application may be maintained even when the user is absent. In addition, when the user is absent, costs may be reduced by using a low-performance instance.

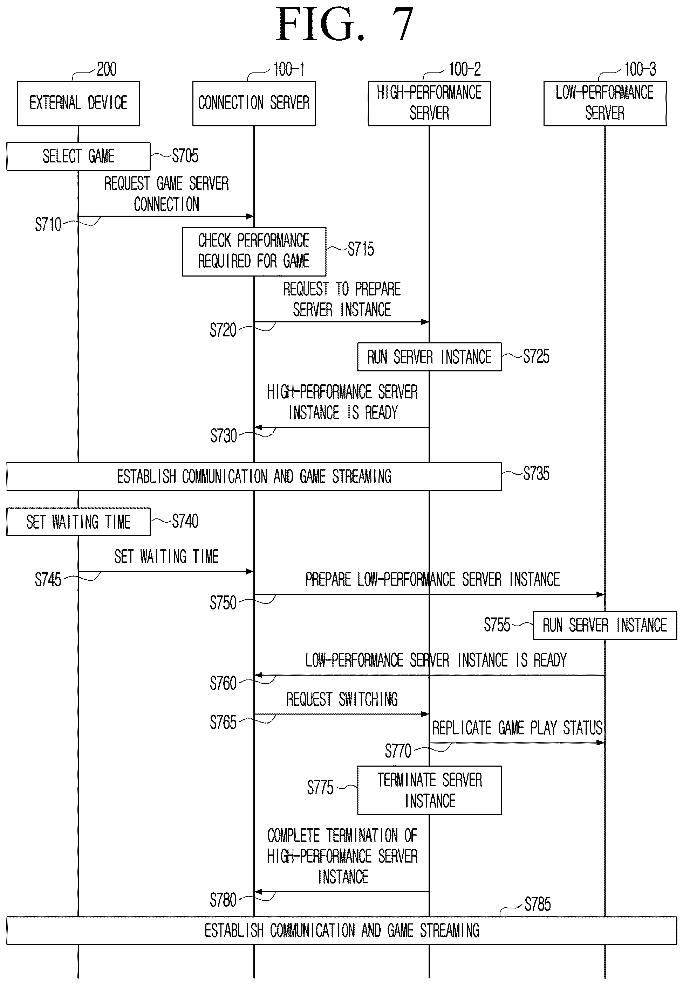

FIG. 7 is a sequence diagram illustrating an operation according to a waiting time setting according to an embodiment of the disclosure. For convenience of description, in FIG. 7, the electronic device 100 is illustrated as including a connection server 100-1, a high-performance server 100-2, and a low-performance server 100-3. Furthermore, the application is described as a game.

First, based on a user command to select a game being received (S705), the external device 200 may request a game server connection to the connection server 100-1 (S710).

The connection server 100-1 may check the performance required for the game (S715) and request the high-performance server 100-2 to prepare a server instance (S720).

The high-performance server 100-2 may run a server instance (S725) and transmit to the connection server 100-1 a notification that the high-performance server instance is ready (S730).

The connection server 100-1 may establish communication between the external device 200 and the high-performance server 100-2 and perform game streaming (S735).

Thereafter, based on a user command for setting a waiting time being received (S740), the external device 200 may transmit a control command requesting the waiting time setting to the connection server 100-1 (S745).

The connection server 100-1 may request the low-performance server 100-3 to prepare a low-performance server instance (S750).

The low-performance server 100-3 may run a server instance (S755) and transmit to the connection server 100-1 a notification that the low-performance server instance is ready (S760).

The connection server 100-1 may request switching from the high-performance server 100-2 (S765), and the high-performance server 100-2 may transmit a game play status to the low-performance server 100-3 (S770). That is, the low-performance server 100-3 may replicate the current game play status of the high-performance server 100-2. After transmitting the game play status, the high-performance server 100-2 terminates the server instance (S775) and transmits to the connection server 100-1 a notification that the termination of the high-performance server instance has been completed (S780).

The connection server 100-1 may establish communication between the external device 200 and the low-performance server 100-3 and performs game streaming (S785).

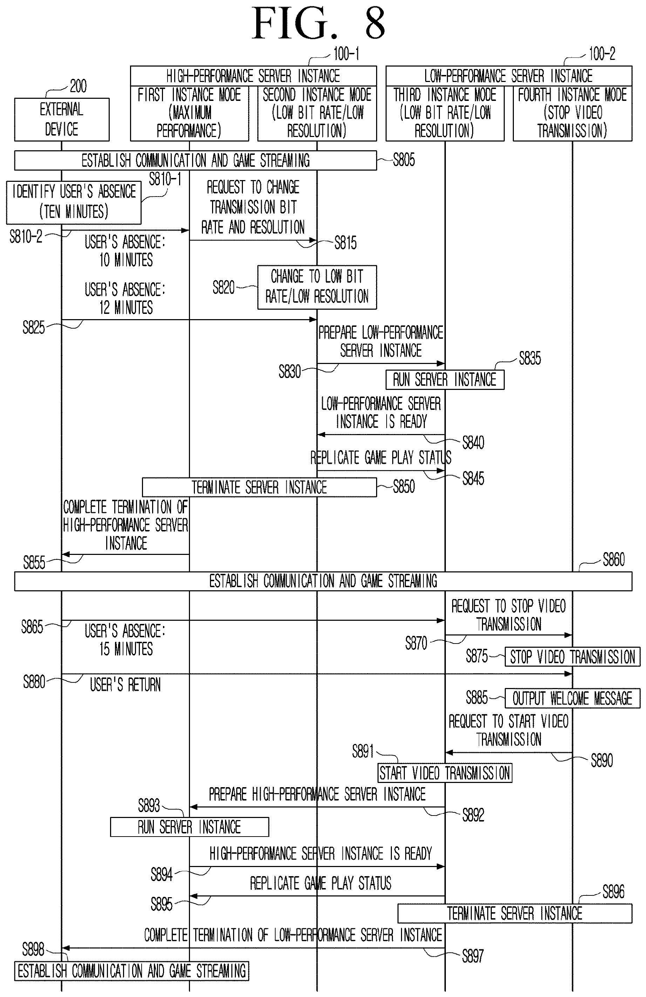

FIG. 8 is a sequence diagram illustrating an instance change operation according to an embodiment of the disclosure. For convenience of description, in FIG. 8, the electronic device 100 is illustrated as operating as a high-performance server instance 100-1 or a low-performance server instance 100-2. Here, the high-performance server instance 100-1 may include a relatively high-performance GPU/CPU, as compared to the low-performance server instance 100-2. The high-performance server instance 100-1 may operate in a first instance mode with maximum performance or a second instance mode with low bit rate/low resolution. The low-performance server instance 100-2 may run in a third instance mode or a fourth instance mode in which a video is not transmitted, and the third instance mode may have a lower bit rate and resolution than the second instance mode. In FIG. 8, each mode is illustrated as being capable of transmitting and receiving data, but this is to highlight the current mode of each server instance, and in reality, it may be the operation of each server instance. Meanwhile, the application is described as being a game.

First, the high-performance server instance 100-1 may establish communication with the external device 200 and may perform game streaming (S805).

Thereafter, based on the user's absence identified for, for example, 10 minutes (S810-1), the external device 200 may provide information corresponding to the user's absence to the first instance mode of the high-performance server instance 100-1 (S810-2).

The first instance mode may request a change in transmission bit rate and resolution to the second instance mode (S815), and the second instance mode may change an operating status to a low bit rate and low resolution (S820).

Thereafter, based on the user's absence identified for, for example, 12 minutes, the external device 200 may provide information corresponding to the user's absence to the second instance mode of the high-performance server instance 100-1 (S825).

The second instance mode may request the low-performance server instance 100-2 to prepare a low-performance server instance from the third instance mode (S830).

The third instance mode may operate the server instance (S835) and transmit to the second instance mode that the low-performance server instance is ready (S840).

The second instance mode may provide a game play status to the third instance mode (S845), and the high-performance server instance 100-1 may terminate the server instance (S850) and transmit to the external device 200 a notification that the termination of the high-performance server instance is completed (S855).

The low-performance server instance 100-2 may establish communication with the external device 200 and perform game streaming (S860).

Thereafter, based on the user's absence identified for, for example, 15 minutes, the external device 200 may provide information corresponding to the user's absence to the third instance mode (S865). The third instance mode may request the fourth instance mode to stop video transmission (S875), and the fourth instance mode may stop video transmission (S875).

Based on the user's return being identified, the external device 200 may transmit information on the user's return to the fourth instance mode (S880), and the fourth instance mode may output a welcome message (S885) and request the third instance mode to start video transmission (S890).

The third instance mode may start video transmission (S891) and request the first instance mode to prepare a high-performance server instance (S892).

The first instance mode may run the server instance (S893) and transmit to the third instance mode a notification that the high-performance server instance is ready (S894).

The third instance mode may provide the game play status to the second instance mode (S895), and the low-performance server instance 100-2 may terminate the server instance (S896) and transmit to the external device 200 a notification that the termination of the low-performance server instance has been completed (S897).

The first instance mode may establish communication with the external device 200 and perform game streaming (S898).

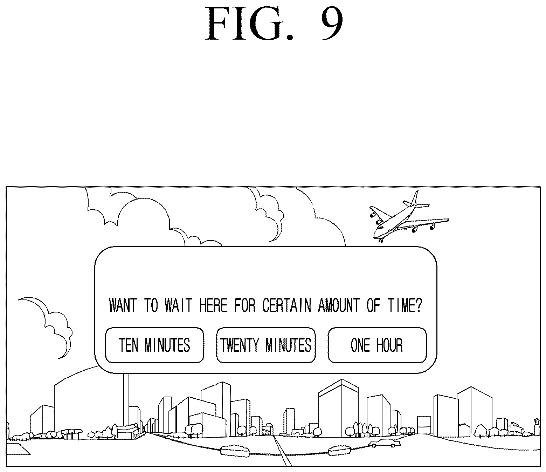

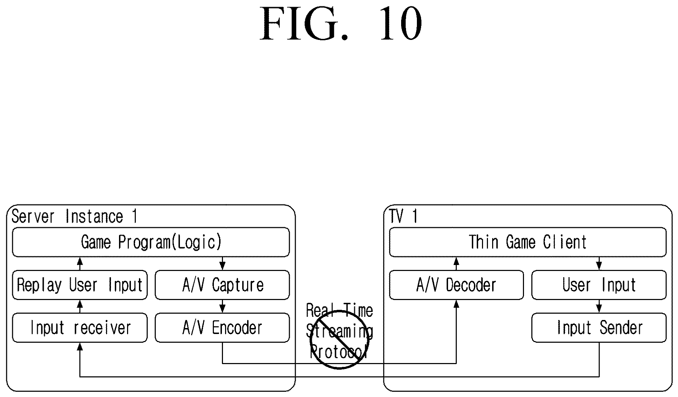

FIGS. 9 and 10 are diagrams illustrating a timer function according to an embodiment of the disclosure.

The processor 230 of the external device 200 may provide a timer function. For example, based on a user's timer function execution command or the user's absence identified for a predetermined period of time, the processor 230 may display a UI representing the timer function, as illustrated in FIG. 9.

Based on a command for a waiting time received from the user, the processor 230 may transmit information on the waiting time to the electronic device 100, and the electronic device 100 may change the instance to a low-performance during the waiting time.

For example, as illustrated in FIG. 10, the electronic device 100 may not transmit the screen during the waiting time.

However, without being limited thereto, the electronic device 100 may also lower the transmission frame rate of the screen or the resolution of the screen during the waiting time.

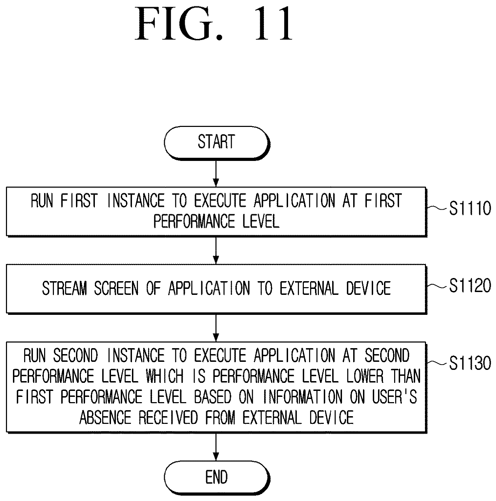

FIG. 11 is a flowchart illustrating a control method of an electronic device according to an embodiment of the disclosure.

First, a first instance is run to execute an application at a first performance level (S1110). Also, a screen corresponding to the execution of the application is streamed to an external device (S1120). Then, based on information corresponding to the user's absence received from the external device, a second instance is run to execute the application at a second performance level which is a performance level lower than the first performance level (S1130).

In addition, in the operation of executing the application at the second performance level (S1130), based on a first period of time having elapsed since the information corresponding to the user's absence was received, the application may be executed at the second performance level by running the second instance.

Also, in the operation of executing the application at the first performance level (S1110), the first subprocessor may run the first instance to execute the application at the first performance level, and in the operation of executing the application at the second performance level (S1130), based on the first period of time having elapsed since the information corresponding to the user's absence was received, the second subprocessor may run the second instance with lower performance than the first subprocessor to lower at least one of the transmission bit rate of the screen corresponding to the execution of the application or the resolution of the application.

Furthermore, an operation in which, based on the second period of time, greater than the first period of time, having elapsed since the information corresponding to the user's absence was received, the first subprocessor transmits first information for controlling the second subprocessor to execute the application to the second subprocessor and an operation in which the second subprocessor runs the third instance to execute the application at a third performance level which is a performance level lower than the second performance level may be further included.

Furthermore, an operation in which, based on a third period of time, greater than the second period of time period, having elapsed since the information corresponding to the user's absence was received, the second subprocessor runs a fourth instance to execute the application and an operation of terminating the streaming of the screen corresponding to the execution of the application may be further included.

Furthermore, an operation in which, based on information corresponding to the user's presence received from an external device, the second subprocessor runs the third instance to execute the application at the third performance level, an operation in which the second subprocessor provides second information for controlling the first subprocessor to execute the application to the first subprocessor, and an operation in which the first subprocessor runs the first instance to execute the application at the first performance level may be further included.

Furthermore, the first information may include an execution command for the second subprocessor and status information of the application, and an operation in which the first subprocessor provides the first information to the second subprocessor and then the running of the second instance is terminated may be further included.

Furthermore, an operation of, based on information corresponding to the user's presence received from an external device, running the first instance to execute the application at the first performance level may be further included.

Furthermore, an operation of, based on information regarding a waiting time of the application received from an external device, running the second instance during the waiting time and executing the application at the second performance level may be further included.

Furthermore, in the operation of executing the application at the first performance level (S1110), based on an execution command of the application received from the external device, the application may be executed at the first performance level by running the first instance.

According to various embodiments of the disclosure, the electronic device may reduce costs by changing the operating performance of the application based on the presence of the user of the external device.

Meanwhile, according to an embodiment of the disclosure, the various embodiments described above may be implemented in software including an instruction stored in a machine-readable storage medium (for example, a computer-readable storage medium). A machine may be a device that invokes the stored instruction from a storage medium, may be operated based on the invoked instruction, and may include the electronic apparatus according to the disclosed embodiments. Based on the instruction being executed by the processor, the processor may directly perform a function corresponding to the instruction, or other components may perform the function corresponding to the instruction under a control of the processor. The instruction may include codes generated or executed by a compiler or an interpreter. The machine-readable storage medium may be provided in the form of a non-transitory storage medium. Here, the term "non-transitory" indicates that the storage medium is tangible without including a signal, and does not distinguish whether data are semi-permanently or temporarily stored in the storage medium.

Also, according to an embodiment of the disclosure, the method according to the aforementioned various embodiments may be provided while being included in a computer program product. A computer program product refers to a product, and it may be traded between a seller and a buyer. A computer program product may be distributed in the form of a storage medium that is readable by machines (e.g.: a compact disc read only memory (CD-ROM)), or may be distributed on-line through an application store (e.g.: Play Store^{™}). In the case of on-line distribution, at least a portion of a computer program product may be stored in a storage medium, such as the server of the manufacturer, the server of the application store, and the memory of the relay server at least temporarily, or may be generated temporarily.

Also, according to an embodiment of the disclosure, the aforementioned various embodiments may be implemented in a recording medium that may be read by a computer or an apparatus similar to a computer, by using software, hardware, or a combination thereof. In some cases, the embodiments described in this specification may be implemented as a processor itself. According to implementation by software, the embodiments, such as processes and functions described in this specification may be implemented as separate software modules. Each of the software modules may perform one or more functions and operations described in this specification.

Meanwhile, computer instructions for performing processing operations of machines according to the aforementioned various embodiments may be stored in a non-transitory computer-readable medium. Computer instructions stored in such a non-transitory computer-readable medium make the processing operations at machines according to the aforementioned various embodiments performed by a specific machine, when the instructions are executed by the processor of the specific machine. A non-transitory computer-readable medium refers to a medium that stores data semi-permanently, and is readable by machines, but not a medium that stores data for a short moment, such as a register, a cache, and a memory. As specific examples of a non-transitory computer-readable medium, there may be a CD, a DVD, a hard disc, a blue-ray disc, a USB, a memory card, a ROM and the like.

Also, each of the components according to the aforementioned various embodiments (e.g.: a module or a program) may consist of a singular object or a plurality of objects. Also, among the aforementioned corresponding sub components, some sub components may be omitted, or other sub components may be further included in the various embodiments. Alternatively or in addition, some components (e.g.: a module or a program) may be integrated as an object, and perform the functions that were performed by each of the components before integration identically or in a similar manner. Operations performed by a module, a program, or other components according to the various embodiments may be executed sequentially, in parallel, repetitively, or heuristically. Or, at least some of the operations may be executed in a different order or omitted, or other operations may be added.

So far, preferred embodiments of the disclosure have been shown and described, but the disclosure is not limited to the aforementioned specific embodiments, and it is apparent that various modifications may be made by those having ordinary skill in the technical field to which the disclosure belongs, without departing from the gist of the disclosure as claimed by the appended claims. Also, it is intended that such modifications are not to be interpreted independently from the technical idea or prospect of the disclosure.

## Claims

1. An electronic device comprising:
a communication interface; and
one or more processors connected to the communication interface to control the electronic device,
wherein the processor is configured to
execute an application at a first performance level by running a first instance,
control the communication interface to stream a screen corresponding to the execution of the application to an external device, and
execute, based on information corresponding to a user's absence received from the external device through the communication interface, the application at a second performance level which is a performance level lower than the first performance level by running a second instance.

2. The electronic device as clamed in claim 1, wherein the processor is configured to, based on a first period of time having elapsed since the information corresponding to the user's absence was received, execute the application at the second performance level by running the second instance.

3. The electronic device as clamed in claim 2, wherein
the processor comprises:
a first subprocessor; and
a second subprocessor having lower performance than the first subprocessor,
wherein the first subprocessor is configured to
execute the application at the first performance level by running the first instance,
control the communication interface to stream a screen corresponding to the execution of the application to the external device, and
lower, based on the first period of time having elapsed since the information corresponding to the user's absence was received, at least one of a transmission bit rate of the screen corresponding to the execution of the application or a resolution of the application by running the second instance.

4. The electronic device as clamed in claim 3, wherein
the first subprocessor is configured to provide, based on a second period of time, greater than the first period of time, having elapsed since the information corresponding to the user's absence was received, first information for controlling the second subprocessor to execute the application to the second subprocessor, and
the second subprocessor is configured to execute the application at a third performance level which is a performance level lower than the second performance level by running a third instance and control the communication interface to stream the screen corresponding to the execution of the application to the external device.

5. The electronic device as clamed in claim 4, wherein the second subprocessor is configured to, based on a third period of time, greater than the second period of time, having elapsed since the information corresponding to the user's absence was received, execute the application by running a fourth instance and terminate the streaming of the screen corresponding to the execution of the application.

6. The electronic device as clamed in claim 5, wherein
the second subprocessor is configured to, based on information corresponding to the user's presence received from the external device through the communication interface, execute the application at the third performance level by running the third instance and control the communication interface to stream the screen corresponding to the execution of the application to the external device, and provide second information for controlling the first subprocessor to execute the application to the first subprocessor, and
the first subprocessor is configured to execute the application at the first performance level by running the first instance and control the communication interface to stream the screen corresponding to the execution of the application to the external device.

7. The electronic device as clamed in claim 4, wherein
the first information comprises an execution command of the second subprocessor and status information of the application, and
the first subprocessor is configured to terminate the running of the second instance after providing the first information to the second subprocessor.

8. The electronic device as clamed in claim 1, wherein the processor is configured to, based on information corresponding to the user's presence received from the external device through the communication interface, execute the application at the first performance level by running the first instance.

9. The electronic device as clamed in claim 1, wherein the processor is configured to, based on information on a waiting time of the application received from the external device, execute the application at the second performance level by running the second instance during the waiting time.

10. The electronic device as clamed in claim 1, wherein the processor is configured to, based on an execution command of the application received from the external device, execute the application at the first performance level by running the first instance.

11. A control method of an electronic device, the control method comprising:
executing an application at a first performance level by running a first instance;
streaming a screen corresponding to the execution of the application to an external device; and
executing, based on information corresponding to a user's absence received from the external device, the application at a second performance level which is a performance level lower than the first performance level by running a second instance.

12. The control method as claimed in claim 11, wherein the executing of the application at the second performance level comprises executing, based on a first period of time having elapsed since the information corresponding to the user's absence was received, execute the application at the second performance level by running the second instance.

13. The control method as claimed in claim 12, wherein
the executing of the application at the first performance level comprises executing the application at the first performance level by running, by a first subprocessor, the first instance, and
the executing of the application at the second performance level comprises executing, based on the first period of time having elapsed since the information corresponding to the user's absence was received, lowering at least one of a transmission bit rate of the screen corresponding to the execution of the application or a resolution of the application by running the second instance, by the second subprocessor with lower performance than the first subprocessor,.

14. The control method as claimed in claim 13, further comprising:
providing, based on a second period of time, greater than the first period of time, having elapsed since the information corresponding to the user's absence was received, by the first subprocessor, first information for controlling the second subprocessor to execute the application to the second subprocessor; and
executing the application at a third performance level which is a performance level lower than the second performance level by running, by the second subprocessor, a third instance.

15. The control method as claimed in claim 14, further comprising:
executing, based on a third period of time, greater than the second period of time, having elapsed since the information corresponding to the user's absence was received, the application by running a fourth instance by the second subprocessor; and
terminating the streaming of the screen corresponding to the execution of the application.
